# EUROPEAN PATENT APPLICATION

(11) **EP 4 563 855 A1**
(43) Date of publication of application: **04.06.2025**
(21) Application number: 23846080.2
(22) Date of filing: 22.06.2023
(51) Int. Cl.: F16K 15/02

(54) **CHECK VALVE**

(30) Priority: 25.07.2022 JP 2022117870
(71) Applicant: Nitto Kohki Co., Ltd., Tokyo 146-8555 (JP)
(72) Inventor: NOHARA, Hidetoshi, Tokyo 146-8555 (JP); TAGAMI, Daiki, Tokyo 146-8555 (JP)
(74) Representative: Wimmer, Hubert
(86) International application number: PCT/JP2023/023037
(87) International publication number: WO 2024/024346

(57) **Abstract**

Provided is a check valve configured to ensure high sealability and to prevent breakage and scattering of a valve element even when high fluid pressure is applied thereto. The check valve (1) includes a flow path member (14) having an inner peripheral surface (12) defining a fluid passage (10), and a valve element (16) disposed in the fluid passage (10) so as to be displaceable between a closed position where the valve element closes the fluid passage (10) and an open position where the valve element opens the fluid passage (10). The valve element (16) is formed of a material with lower rigidity than at least portions of the flow path member (14) where a valve seat surface (30) and a locking surface (32) are formed. When the valve element (16) is displaced, by receiving a force toward an upstream side, from the closed position to a position further upstream of the closed position while deforming an abutting portion (36) of the valve element (16) that is engaged with the valve seat surface (30), the valve element (16) that has deformed is engaged with and supported by the locking surface (32).

## Description

### TECHNICAL FIELD:

The present invention relates to check valves.

### BACKGROUND ART:

A check valve for preventing backflow of fluid usually involves a flow path member having a fluid passage and a valve element disposed in the fluid passage. The valve element is disposed in the fluid passage so as to be displaceable between a closed position where the valve element closes the fluid passage and an open position where the valve element opens the fluid passage. In addition, the valve element is urged upstream by a spring. In the closed position, the valve element is pressed against a valve seat surface of the flow path member by the urging force of the spring, thereby being sealingly engaged with the valve seat surface. The valve element is also pressed against the valve seat surface by the fluid pressure applied from the downstream side. In check valves used for a fluid of relatively low pressure, a seal ring formed of an elastic material such as rubber is attached to the valve element so as to be sandwiched between the valve element and the valve seat surface, thereby enabling the area between the valve element and the valve seat surface to be sealed with a relatively small pressing force. However, check valves used for high-pressure fluids involve the possibility that the seal ring may be detached or broken by the strong force of the high-pressure fluid, and therefore often adopt a so-called a metal-to-metal sealing structure, in which the seal ring is not used; instead, a valve element and a valve seat surface which are formed of metallic materials of high rigidity are directly abutted against each other (for example, Patent Literature 1).

### Citation List:

### Patent Literature:

Patent Literature 1: Japanese Patent Application Publication No. 2016-94962

### SUMMARY OF INVENTION:

### TECHNICAL PROBLEM:

The metal-to-metal sealing structure, in which metallic materials of high rigidity are directly abutted against each other, has high pressure resistance but needs to form the valve element and the valve seat surface with high accuracy in order to achieve satisfactory sealability because the valve element and the valve seat surface are not easily elastically deformable when abutted against each other. In addition, relatively loud noise is likely to occur when the valve element collides with the valve seat surface. When chattering occurs, in particular, the noise may cause problems. On the other hand, if the valve element is formed of a material of low rigidity (e.g. resin material), when abutted against the valve seat surface, the valve element is easily elastically deformable following the shape of the valve seat surface, so that high sealability can be achieved relatively easily. This also may reduce noise occurring when the valve element collides with the valve seat surface. However, because the valve element is formed of a low-rigidity material, there is a high risk that the valve element may be greatly deformed when excessive fluid pressure is applied thereto from the downstream side in a valve closed state; under certain circumstances, the valve element may be partly broken and scattered in the flow path.

Accordingly, it is an object of the present invention to provide a check valve configured to ensure high sealability and to prevent breakage and scattering of the valve element even when high fluid pressure is applied thereto.

### SOLUTION TO PROBLEM:

That is, the present invention provides a check valve including: a flow path member having an upstream opening, a downstream opening, and an inner peripheral surface defining a fluid passage extending from the upstream opening to the downstream opening, the inner peripheral surface having formed thereon a valve seat surface and a locking surface located upstream and radially inward of the valve seat surface; and a valve element disposed in the fluid passage so as to be displaceable between a closed position where the valve element is engaged with the valve seat surface to close the fluid passage and an open position where the valve element is separated from the valve seat surface toward a downstream side to open the fluid passage. The valve element is formed of a material with lower rigidity than at least portions of the flow path member where the valve seat surface and the locking surface are formed, so that when the valve element is displaced, by receiving a force toward an upstream side, from the closed position to a position further upstream of the closed position while deforming a portion of the valve element that is engaged with the valve seat surface, the valve element that has deformed is engaged with and supported by the locking surface.

In the above-described check valve, even when a portion of the valve element that is abutted against the valve seat surface is deformed by the application of a large force, for example, by excessive fluid pressure applied from the downstream side to the valve element in the closed position, the valve element is supported relative to the flow path member at the locking surface. Therefore, it is possible to prevent the valve element from being further displaced toward the upstream side while being deformed. In addition, because the deformed portion of the valve element engages the locking surface, it is possible to prevent the deformed portion from being broken and scattered like being torn off by the surrounding pressure. On the other hand, it is possible to form the valve element of a material of relatively low rigidity while ensuring a minimal level of safety and hence possible to easily achieve high sealability between the valve element and the valve seat surface. In addition, noise occurring when the valve element collides with the valve seat surface can be reduced as compared with a case where the valve element is formed of a high-rigidity metal.

The valve seat surface and the locking surface may be inclined radially inward toward the upstream side, and a transition surface parallel to the longitudinal axis of the fluid passage may be formed between the valve seat surface and the locking surface.

Furthermore, the valve element may be formed of a resin material, and the flow path member may be formed of a metallic material.

Embodiments of a check valve according to the present invention will be explained below based on the accompanying drawings.

### BRIEF DESCRIPTION OF DRAWINGS:

Fig. 1 is a sectional view of a check valve according to an embodiment of the present invention, showing the check valve in a closed position.
Fig. 2 is a sectional view of the check valve in Fig. 1, showing the check valve in an open position.
Fig. 3 is a sectional view of the check valve in Fig. 1, showing the check valve in a state where a valve element has been deformed and engaged a locking surface.

### DESCRIPTION OF EMBODIMENTS:

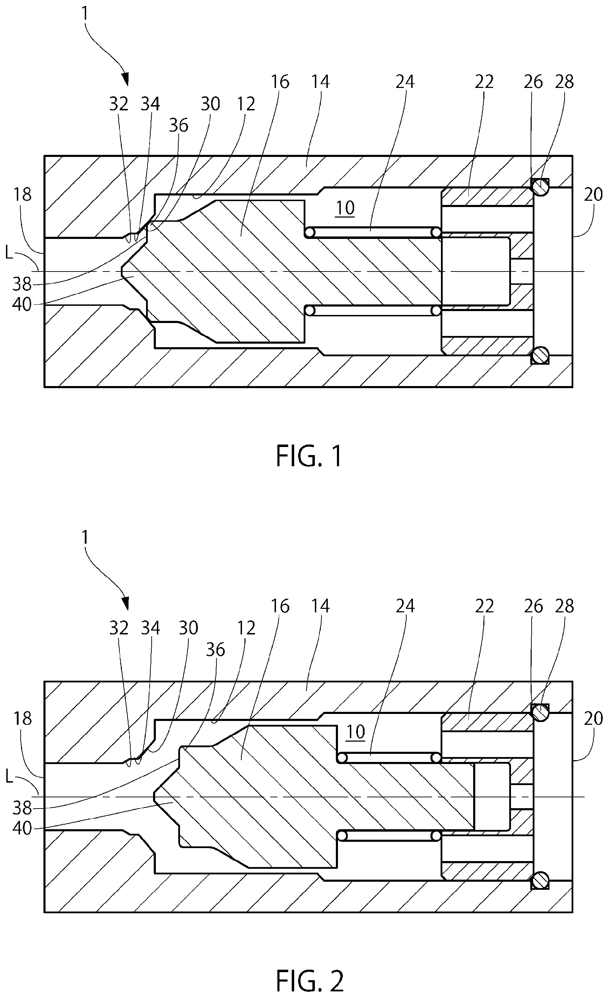

As shown in Fig. 1, a check valve 1 according to an embodiment of the present invention includes a flow path member 14 having an inner peripheral surface 12 defining a fluid passage 10, and a valve element 16 disposed in the fluid passage 10 so as to be displaceable in the direction of a longitudinal axis L. The fluid passage 10 extends along the longitudinal axis L from an upstream opening 18 to a downstream opening 20. The fluid passage 10 is further provided therein with a support member 22 attached to the inner peripheral surface 12 of the flow path member 14 and a spring 24 set between the valve element 16 and the support member 22. The support member 22 is retained by a stop ring 28 secured in an annular recess 26 in the inner peripheral surface 12.

The inner peripheral surface 12 of the flow path member 14 includes a valve seat surface 30, a locking surface 32 located upstream and radially inward of the valve seat surface 30, and a transition surface 34 extending parallel to the longitudinal axis L of the flow path member 14 between the valve seat surface 30 and the locking surface 32. The valve seat surface 30 and the locking surface 32 are inclined radially inward toward the upstream side.

The valve element 16 has an abutting portion 36 engageable with the valve seat surface 30, a forward end face 38 extending radially inward from the abutting portion 36, and a projecting portion 40 projecting upstream from the forward end face 38. The forward end face 38 extends to a position slightly radially inward of the locking surface 32 of the flow path member 14. The valve element 16 is urged upstream by the spring 24, so that the abutting portion 36 of the valve element 16 is pressed against the valve seat surface 30 of the flow path member 14. Thus, the abutting portion 36 of the valve element 16 sealingly engages the valve seat surface 30, thereby closing the fluid passage 10. It should be noted that, in this embodiment, the flow path member 14 is formed of a metallic material (e.g. stainless steel), and the valve element 16 is formed of a resin material (e.g. high-strength resin). Because the valve element 16 is formed of a resin material with lower rigidity than the metallic material, when pressed against the valve seat surface 30, the valve element 16 is appropriately elastically deformed following the shape of the valve seat surface 30, thereby providing high sealability between the valve element 16 and the valve seat surface 30.

When the fluid pressure at the upstream opening 18 side is less than the resultant force of the urging force of the spring 24 and the fluid pressure at the downstream opening 20 side, the valve element 16 is pressed against the valve seat surface 30 of the flow path member 14 by the urging force of the spring 24 and the fluid pressure applied from the downstream opening 20 side, thereby closing the fluid passage 10. That is, the valve element 16 assumes a closed position (Fig. 1). When the fluid pressure at the upstream opening 18 side exceeds the resultant force of the urging force of the spring 24 and the fluid pressure at the downstream opening 20 side, the valve element 16 separates from the valve seat surface 30 toward the downstream side to open the fluid passage 10, as shown in Fig. 2. That is, the valve element 16 is displaced to an open position. Consequently, the fluid flows from the upstream opening 18 toward the downstream opening 20. At this time, the projecting portion 40 of the valve element 16 allows the fluid to flow smoothly toward between the abutting portion 36 of the valve element 16 and the valve seat surface 30 of the flow path member 14.

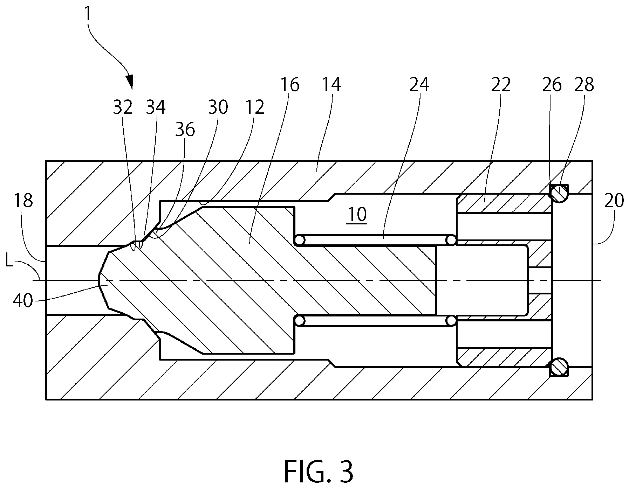

When the fluid pressure at the upstream opening 18 side drops due, for example, to the suspension of the supply of fluid from the upstream opening 18, the valve element 16 is pushed toward the upstream side by the urging force of the spring 24 and the fluid pressure applied from the downstream opening 20 side. The valve element 17 returns to the closed position shown in Fig. 1 and closes the fluid passage 10 again. This prevents the backflow of fluid from the downstream opening 20 to the upstream opening 18. It should be noted here that the forces that the valve element 16 receives from the spring 24 and the downstream-side fluid concentrate on the abutting portion 36 that is in abutting contact with the valve seat surface 30. As long as the fluid pressure applied from the downstream side is within appropriately a set specification of the check valve 1, it is hardly possible that the abutting portion 36 of the valve element 16 may be deformed significantly. However, when an excessive fluid pressure that greatly exceeds the specification is applied to the valve element 16 from the downstream side for some reason, the abutting portion 36 of the valve element 16 may be greatly deformed. In such a case, the valve element 16 is displaced from the closed position shown in Fig. 1 to further upstream of the closed position while being deformed. As the amount of deformation of the valve element 16 increases, and when the amount of displacement of the valve element 16 toward the upstream side becomes greater than a predetermined value, the deformed valve element 16 abuts against the locking surface 32 formed on the inner peripheral surface 12 of the flow path member 14, as shown in Fig. 3. By abutting against the locking surface 32, the deformed valve element 16 is additionally supported by the locking surface 32, and thus prevented from being displaced further toward the upstream side. Although there is a possibility that the greatly plastically deformed portion of the valve element 16 may have become easily breakable due to a reduction in mechanical strength, the plastically deformed portion of the valve element 16 is supported by the inclined locking surface 32 and therefore prevented from being broken and scattered in the fluid passage 10. Incidentally, it has been confirmed by experiments and simulations that breakage of the valve element 16 is less likely to occur when the locking surface 32 is provided as in this embodiment than when such a locking surface 32 is not provided.

Thus, with the check valve 1, high sealability can be achieved relatively easily by forming the valve element 16 of a material with relatively low rigidity and high elasticity, and it is also possible to reduce noise occurring when the valve element 16 collides as compared with a case where the valve element is formed of a high-rigidity metallic material. In addition to these advantageous features, the following advantage is obtained. Even if the valve element 16 is greatly deformed by an excessive fluid pressure applied from the downstream side in a valve closed state, the deformed valve element 16 is supported by the locking surface 32, thereby making it possible to prevent the valve element 16 from being further deformed and broken. Thus, the valve element 16 can be prevented from being scattered in the fluid passage 10.

Although some embodiments of the present invention have been explained above, the present invention is not limited to these embodiments. For example, the materials constituting the flow path member and the valve element are not limited to the above-described metallic and resin materials, respectively, but other metallic and resin materials may be used to constitute the flow path member and the valve element, respectively, taking into account the conditions of use, e.g. type, pressure and temperature of the fluid. In addition, the flow path member does not necessarily need to be formed of a metallic material. If no very high-pressure fluid flows through the flow path member, for example, the flow path member may be formed of a resin material of relatively high rigidity, and the valve element may be formed of another resin or rubber material with lower rigidity than the resin material constituting the flow path member. In other words, as a material forming each member, an optimal material may be appropriately selected according to the conditions of use, provided that the valve element is formed of a material with lower rigidity than the flow path member. Furthermore, the whole of the flow path member does not necessarily need to be formed of a material with higher rigidity than the valve element, but the important thing is that at least portions of the flow path member where the locking surface and the locking surface are formed are formed of the above-described material. The locking surface does not necessarily need to be inclined relative to the longitudinal axis. It may instead be perpendicular to the longitudinal axis. The check valve according to the present invention is applicable to a variety of fluids, for example, gases such as oxygen and hydrogen, liquids such as water and chemicals, or gas-liquid mixed fluid.

### LIST OF REFERENCE SIGNS:

1: check valve
10: fluid passage
12: inner peripheral surface
14: flow path member
16: valve element
18: upstream opening
20: downstream opening
22: support member
24: spring
26: annular recess
28: stop ring
30: valve seat surface
32: locking surface
34: transition surface
36: abutting portion
38: forward end face
40: projecting portion
L: longitudinal axis

## Claims

1. A check valve comprising:
a flow path member having an upstream opening, a downstream opening, and an inner peripheral surface defining a fluid passage extending from the upstream opening to the downstream opening, the inner peripheral surface having a valve seat surface and a locking surface located upstream and radially inward of the valve seat surface; and
a valve element disposed in the fluid passage so as to be displaceable between a closed position where the valve element is engaged with the valve seat surface to close the fluid passage and an open position where the valve element is separated from the valve seat surface toward a downstream side to open the fluid passage;
wherein the valve element is formed of a material with lower rigidity than at least portions of the flow path member where the valve seat surface and the locking surface are formed, so that when the valve element is displaced, by receiving a force toward an upstream side, from the closed position to a position further upstream of the closed position while deforming a portion of the valve element that is engaged with the valve seat surface, the valve element that has deformed is engaged with and supported by the locking surface.

2. The check valve of claim 1, wherein the valve seat surface and the locking surface are inclined radially inward toward the upstream side, and a transition surface parallel to a longitudinal axis of the fluid passage is formed between the valve seat surface and the locking surface.

3. The check valve of claim 1 or 2, wherein the valve element is formed of a resin material, and the flow path member is formed of a metallic material.
